# EUROPÄISCHE PATENTSCHRIFT

(11) **EP 3 274 767 B1**
(45) Veröffentlichungstag und Bekanntmachung des Hinweises auf die Patenterteilung: **25.09.2019**
(21) Anmeldenummer: 16716161.1
(22) Anmeldetag: 23.03.2016
(51) Int. Cl.: G03B 42/02, G03B 42/08

(54) **SPEICHERFOLIENSCANNER**
IMAGING PLATE SCANNER
SCANNER D'ÉCRAN À MÉMOIRE

(30) Priorität: 27.03.2015 DE 102015003902
(43) Veröffentlichungstag der Anmeldung: 31.01.2018
(73) Patentinhaber: Dürr Dental SE, 74321 Bietigheim-Bissingen (DE)
(72) Erfinder: WEBER, Michael, 71576 Burgstetten (DE); PHILIPPS, Bernd, 74199 Untergruppenbach (DE)
(74) Vertreter: Ostertag & Partner Patentanwälte mbB
(86) Internationale Anmeldenummer: PCT/EP2016/000508
(87) Internationale Veröffentlichungsnummer: WO 2016/155874

(56) Entgegenhaltungen:
- US-A- 5 376 806
- US-A- 5 592 374
- US-A1- 2006 180 778

## Beschreibung

Die Erfindung betrifft eine Vorrichtung zum Auslesen einer belichteten Speicherfolie.

In der Röntgentechnik, insbesondere in der dentalmedizinischen Röntgentechnik, werden heutzutage Speicherfolien zur Aufnahme von Röntgenbildern verwendet. Diese Speicherfolien umfassen ein Phosphormaterial, das in einer transparenten Matrix eingebettet ist. Dadurch entstehen sogenannte Speicherzentren, die durch einfallendes Röntgenlicht in angeregte metastabile Zustände gebracht werden können. Belichtet man eine solche Speicherfolie in einer Röntgenapparatur, beispielsweise zur Aufnahme eines Bissflügels eines Patienten, so enthält die Speicherfolie ein latentes Röntgenbild in Form von angeregten und nicht angeregten Speicherzentren.

Zum Auslesen der Speicherfolie wird diese in einer Scanvorrichtung punktweise mit Ausleselicht abgetastet, wodurch die metastabilen Zustände der angeregten Speicherzentren in einen Zustand gebracht werden, der schnell unter Abgabe von Fluoreszenzlicht relaxiert. Dieses Fluoreszenzlicht kann mithilfe einer Detektoreinheit erfasst werden, sodass man mit einer entsprechenden Auswerteelektronik das Röntgenbild sichtbar machen kann.

Herkömmliche Scanvorrichtungen wie zum Beispiel ein Trommelscanner führen die Speicherfolie entlang einer zylindrischen Fläche über einen Auslesespalt. Im Inneren der Zylinderfläche ist als Ablenkeinheit ein rotierender Spiegel vorgesehen, der einen umlaufenden Auslesestrahl erzeugt. Dieser Auslesestrahl fällt durch den Auslesespalt auf die Speicherfolie und liest diese punktweise aus. Währenddessen wird die Speicherfolie mit einem mechanischen Antrieb an dem Auslesespalt vorbeigeführt, so dass die gesamte Fläche der Speicherfolie erfasst wird.

Üblicherweise wird die Speicherfolie mit voreingestellten oder konstruktiv vorgegebenen festen Ausleseparametern ausgelesen. Ausleseparameter sind beispielsweise die Größe des Ausleseflecks, also beispielsweise die Fokusgröße, auf der Speicherfolie, die Laserintensität des Anregelasers, Verstärkung, Empfindlichkeit und Kennlinie des Bildempfängers und die Integrationszeit pro Bildpunkt. Dies hat zur Folge, dass bei stark wechselnden Aufnahmebedingungen keine optimale Bildqualität erreicht werden kann. Beispielsweise kann auf eine Überbelichtung oder Unterbelichtung einer Speicherfolie oder eine hohe Dynamik innerhalb des auf einer Speicherfolie befindlichen Bildes nicht reagiert werden. Eine Möglichkeit zur Abhilfe besteht darin, durch eine nachfolgende Bildverarbeitung das ausgelesene Bild zu korrigieren. Dies führt aber unter Umständen zu verstärktem Bildrauschen oder zu Bildartefakten. Alternativ kann der gesamte Dynamikbereich des Systems erhöht werden. Dies ist aber oftmals aus wirtschaftlicher oder technischer Sicht nicht realisierbar.

Der Erfindung liegt die Aufgabe zugrunde, eine Vorrichtung und ein Verfahren zum Auslesen einer belichteten Speicherfolie anzugeben, die bzw. das die genannten Nachteile zumindest lindert und insbesondere ein Auslesen des auf der Speicherfolie befindlichen Bildes mit optimalen Ausleseparametern ermöglicht.

Diese Aufgabe wird durch eine Vorrichtung gemäß dem unabhängigen Anspruch 1 gelöst. Weitere Ausgestaltungen der Vorrichtung sind in den Unteransprüchen angegeben. Des Weiteren wird die Aufgabe durch ein Verfahren zum Auslesen einer Speicherfolie gemäß dem unabhängigen Anspruch 10 gelöst. Weitere Ausgestaltungen des Verfahrens sind in den entsprechenden abhängigen Ansprüchen angegeben.

Die erfindungsgemäße Vorrichtung zum Auslesen einer belichteten Speicherfolie umfasst eine Lichtquelle, mit der Ausleselicht erzeugbar ist. Bei der Lichtquelle kann es sich beispielsweise um eine Laserlichtquelle handeln. Die Vorrichtung umfasst weiter eine Ablenkeinheit, mit der das Ausleselicht zum Auslesen der Speicherfolie sequenziell mit einem bestimmten Auslesefleck auf die Speicherfolie richtbar ist. Hierbei wird eine Auslese-Anregeleistung pro Speicherfolienfläche erzeugt. Die Ablenkeinheit kann beispielsweise einen steuerbaren Spiegel zum Ablenken des Ausleselichts umfassen. Bei dem Spiegel kann es sich um einen rotierenden Ablenkspiegel der eingangs genannten Art handeln. Alternativ kann die Vorrichtung eine während des Auslesevorgangs feststehende Speicherfolie und einen beweglichen Spiegel wie beispielsweise einen Mikrospiegel aufweisen.

Des Weiteren ist bei der Vorrichtung eine Detektoreinheit für Fluoreszenzlicht, das von der Speicherfolie beim Auslesen mit dem Ausleselicht abgegeben wird sowie eine Steuereinrichtung vorgesehen, die dazu eingerichtet ist, die Lichtquelle, die Ablenkeinheit und die Detektoreinheit zu steuern.

Erfindungsgemäß ist bei der Vorrichtung vorgesehen, dass die Steuereinrichtung dazu eingerichtet ist, ein Auslesen der Speicherfolie zur Ermittlung von Ausleseparametern durchzuführen und nachfolgend ein Auslesen der Speicherfolie mit dem ermittelten Ausleseparametern durchzuführen. Der dem eigentlichen Auslesevorgang vorgeschaltete Vorauslese-Vorgang kann beispielsweise dazu dienen, den Belichtungszustand der Speicherfolie zu bestimmen. Dies ermöglicht ein Ermitteln optimierter Ausleseparameter für den nachfolgenden eigentlichen Auslesevorgang.

Vorzugsweise ist vorgesehen, dass das Vorauslesen mit Vorausleseparametern durchgeführt wird, die sich von den Ausleseparametern unterscheiden. Somit können für den Vorauslese-Vorgang Vorausleseparameter verwendet werden, die beispielsweise zur Ermittlung des Belichtungszustands der Speicherfolie besonders geeignet sind und gleichzeitig die auf der Speicherfolie abgelegte Information so wenig wie möglich beeinträchtigen.

Es kann vorteilhaft sein, wenn vorgesehen ist, dass die Ausleseparameter eine Ausgangsleistung der Lichtquelle, eine Anregeleistung pro Speicherfolienfläche, eine Fleckgröße, eine Integrationszeit, eine Detektoreinheit-Verstärkung, eine Detektoreinheit-Empfindlichkeit, eine Detektoreinheit-Kennlinie, eine räumliches Ausleseschema oder/und ein zeitliches Ausleseschema umfassen. Die Variation eines dieser Ausleseparameter, eine Kombination der genannten Ausleseparameter oder aller Ausleseparameter kann geeignet sein, den Vorauslese-Vorgang geeignet zu gestalten. Gleichzeitig kann einer dieser Ausleseparameter, eine Kombination der genannten Ausleseparameter oder können alle Ausleseparameter in Abhängigkeit von den bei dem Vorauslesen ermittelten Informationen variiert und damit optimiert werden.

Bei einer möglichen Ausgestaltung der erfindungsgemäßen Vorrichtung kann vorgesehen sein, dass die Steuereinrichtung dazu eingerichtet ist, für das Vorauslesen eine Vorauslese-Anregeleistung pro Speicherfolienfläche zu bestimmen, wobei die Vorauslese-Anregeleistung niedriger als die Auslese-Anregeleistung ist. Es wird also das auf der Speicherfolien auftreffende Ausleselicht hinsichtlich seiner Auslese-Anregeleistung pro Speicherfolienfläche niedriger, insbesondere um einen Faktor zwischen 2 und 100, bevorzugt um einen Faktor zwischen 10 und 50, besonders bevorzugt um einen Faktor 10 niedriger, festgelegt, als es bei dem eigentlichen Auslesevorgang festgelegt ist. Die Vorauslese-Anregeleistung pro Speicherfolienfläche sollte für das Vorauslesen so festgelegt sein, dass bei einem nachfolgenden Auslesevorgang nochmals Fluoreszenzlicht abgegeben werden kann.

Bei dem nachfolgenden Auslesevorgang können die ermittelten Werte anhand der bereits bekannten Vorauslese-Punkte dahingehend korrigiert werden, dass das die bei dem Vorauslesen ausgelesenen Fluoreszenzlicht-Werte zu den bei dem eigentlichen Auslesen ermittelten Fluoreszenzlicht-Werten addiert werden. Alternativ können die bei dem Vorauslesen an einem Speicherfolienort ermittelten Werte verworfen und anhand von Nachbarorten interpoliert werden.

In diesem Zusammenhang kann vorgesehen sein, dass die Vorauslese-Anregeleistung pro Speicherfolienfläche durch eine Vorauslese-Ausgangsleistung der Lichtquelle erzeugbar ist, die kleiner als die Auslese-Ausgangsleistung der Lichtquelle ist. Es kann also erfindungsgemäß vorgesehen sein, die Dauerstrich- oder Puls-Ausgangsleistung des Anregelasers zu reduzieren.

Zusätzlich oder alternativ kann bei einer vorteilhaften Ausführungsform vorgesehen sein, dass die Vorauslese-Anregeleistung pro Speicherfolienfläche durch eine Vorauslese-Fleckgröße erzeugbar ist, die kleiner oder größer als die Auslese-Fleckgröße ist. Es stehen hier zwei Alternativen zur Verfügung. Gemäß der ersten Alternative wird die Vorauslese-Fleckgröße klein gehalten. Es wird somit nur eine im Vergleich zur Gesamtspeicherfolienfläche kleine Fleckgröße für den Vorauslese-Vorgang verwendet. Insbesondere kann die Vorauslese-Fleckgröße kleiner als bei dem eigentlichen Auslesevorgang gewählt werden. Alternativ kann die Auslese-Fleckgröße wesentlich größer gestaltet werden. Dies reduziert bei gleichbleibender Vorauslese-Intensität des Ausleselichts die Anregeleistung pro Speicherfolienfläche und pro Zeiteinheit und führt zu einer Mittelung über einen größeren Bereich der Speicherfolienfläche. Bevorzugt kann die Vorauslese-Fleckgröße mindestens eine Größenordnung größer als die Auslese-Fleckgröße gewählt werden.

Des Weiteren kann zusätzlich oder alternativ bei einer Ausführungsform vorgesehen sein, dass die Vorauslese-Anregeleistung pro Speicherfolienfläche durch einen Vorauslese-Zeitraum bestimmt ist, der kleiner als der Auslesezeitraum ist. Bei dem Auslese-Zeitraum an sich kann es sich um den Zeitraum handeln, der zum Auslesen eines einzelnen Auslesepunkts benötigt wird, also beispielsweise eine Integrationszeit. Es kann sich bei dem Auslese-Zeitraum aber auch um die insgesamt für das Auslesen der gesamten Speicherfolienfläche benötigte Zeit handeln. Über die Reduzierung des zum Auslesen benötigten Zeitraums kann eine Teilinformation des auf der Speicherfolie befindlichen Bildes gewonnen werden, die zum Ermitteln der Ausleseparameter ausreichend ist.

Es kann vorteilhaft sein, wenn das Vorauslesen das Auslesen einer gegenüber der Gesamtzahl an Vorauslese-Punkten kleineren Anzahl an Vorauslese-Punkten umfasst. Es kann also neben der Reduzierung der Anregeleistung pro Speicherfolienfläche beispielsweise durch Reduzieren der Auslese-Ausgangsleistung, durch eine verkleinerte oder vergrößerte Auslese-Fleckgröße oder durch eine reduzierte Auslese-Dauer alternativ oder zusätzlich nur eine bestimmte Anzahl an Auslesepunkten für den Vorauslese-Vorgang ausgelesen werden. Bei einem nachfolgenden Auslesen können die bereits bekannten Vorauslese-Punkte anhand der eigentlichen Auslesepunkte korrigiert oder interpoliert werden.

In diesem Zusammenhang kann vorgesehen sein, dass die Vorauslese-Punkte über die Speicherfolien verteilt sind. Die Verteilung kann dabei eine bestimmte erwartete Bildgestaltung antizipieren. Alternativ oder zusätzlich können die Vorauslese-Punkte zeilen- oder spaltenförmig angeordnet sein. Diese Anordnung kann beispielsweise auf die Ausgestaltung der Ausleseapparatur angepasst sein.

Vorteilhafterweise kann die Steuereinrichtung dazu eingerichtet sein, das Vorauslesen mit einer höheren Auslesegeschwindigkeit durchzuführen. Unter Auslesegeschwindigkeit soll vorliegend die Relativbewegung zwischen dem Ausleselicht und der Speicherfolie verstanden werden. Es kann also zum einen das Ausleselicht schneller über die Speicherfolien bewegt werden oder alternativ die Speicherfolie schneller relativ zur Ausleseapparatur bewegt werden. In beiden Fällen führt die erhöhte Auslesegeschwindigkeit zu einem Teil-Auslesen des in der Speicherfolie enthaltenen Bildes.

Unabhängig von den erläuterten Lösungsansätzen kann die Optimierung der Ausleseparameter ganzflächig für die gesamte Speicherfolienfläche oder ortsabhängig aufgelöst für bestimmte Bereiche der Speicherfolien entsprechend der dortigen Ergebnisse des Vorauslesens angewendet werden.

Das erfindungsgemäße Verfahren zum Auslesen einer Speicherfolie weist die folgenden Schritte auf:
Auslesen eines Teils einer auf der Speicherfolie befindlichen Information; Ermitteln von Ausleseparametern anhand des ausgelesenen Teils der Information; und Auslesen des verbleibenden Teils der Information auf der Speicherfolie mit den Ausleseparametern.

Der Schritt des Auslesens eines Teils der auf der Speicherfolie befindlichen Information kann eines der oben beschriebenen Ausleseverfahren einsetzen. Es kann sich bei einem Teil der Information um einen Teil eines auf der Speicherfolie befindlichen Bildes, insbesondere um einen örtlich begrenzten Abschnitt des Bildes wie etwa einzelne Punkte, Zeilen oder Spalten handeln. Es kann sich aber auch bei dem Teil des Bildes um eine über die gesamte Speicherfolienfläche durchgeführte Auslesung handeln, die beispielsweise aufgrund einer niedriger gewählten Anregungsleistung oder einem zeitlich gesteuerten An- und Ausschalten des Ausleselichts erzielt wird. Ferner kann es sich auch um zusätzliche auf der Speicherfolie befindliche Informationen handeln.

Bei einer bevorzugten Ausgestaltung des Verfahrens kann vorgesehen sein, dass das Auslesen des Teils der Information mit Vorausleseparametern durchgeführt wird, die sich von den Ausleseparametern unterscheiden.

Weiter kann vorteilhaft vorgesehen sein, dass das Ermitteln der Ausleseparameter das Ermitteln der Belichtung der Speicherfolie anhand des ausgelesenen Teils der Information und ein Anpassen der Ausleseparameter anhand einer ermittelten Belichtung umfasst. Aufgrund der über einen bestimmten Bereich oder über die gesamte Speicherfolienfläche ermittelten Belichtung können die Ausleseparameter optimiert und das auf der Speicherfolie verbliebene Bild optimal ausgelesen werden.

Die Erfindung wird nun anhand eines Ausführungsbeispiels unter Bezugnahme auf die Zeichnungen näher erläutert. Es zeigen:
Figur 1 eine schematische Darstellung einer Scanvorrichtung zum Auslesen von Speicherfolien gemäß einem Ausführungsbeispiel; und
Figur 2 ein schematisches Ablaufdiagramm eines Verfahrens gemäß einem Ausführungsbeispiel.

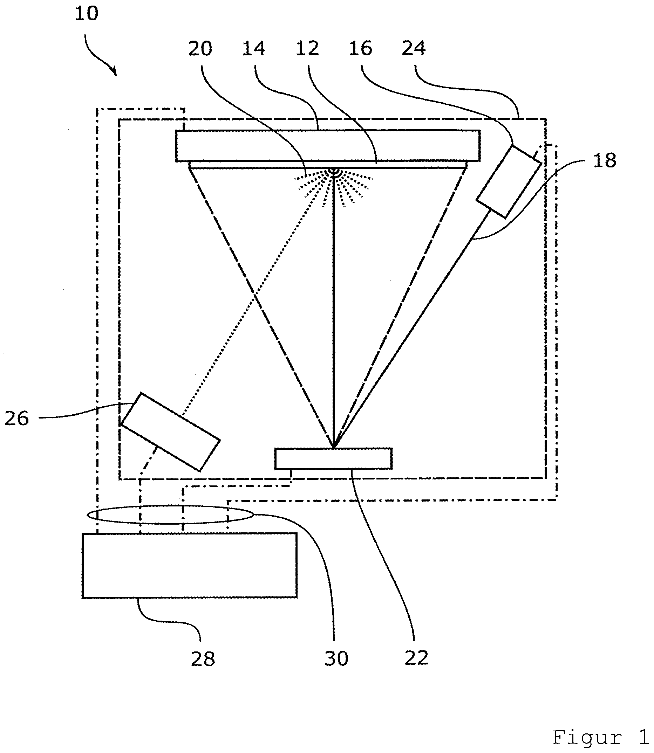

Figur 1 zeigt eine Scanvorrichtung 10 zum Auslesen einer Speicherfolie 12, die in Form von durch Röntgenstrahlung angeregte metastabile Speicherzentren ein latentes Röntgenbild trägt.

Die Scanvorrichtung 10 weist eine Stützvorrichtung 14 für die Speicherfolie 12 auf. Beispielsweise kann die Speicherfolie 12 auf der Stützvorrichtung 14 mit Unterdruck so befestigt sein, dass die Speicherfolie 12, die im Allgemeinen flexibel ist, sich plan an die Stützfläche 14 anschmiegt.

Die Scanvorrichtung 10 umfasst ferner als Ausleselichtquelle einen Laser 16, der einen Ausleselichtstrahl 18 mit einer im Roten liegenden Wellenlänge erzeugt, mit dem die metastabilen Speicherzentren der Speicherfolie 12 zu Fluoreszenz angeregt werden können. Dieses Fluoreszenzlicht 20 liegt typischerweise im Blauen.

In der vorliegenden Ausführungsform der Scanvorrichtung 10 ist der Laser 16 so angeordnet, dass er den Ausleselichtstrahl 18 auf eine steuerbare Ablenkeinheit richtet. Die steuerbare Ablenkeinheit ist vorliegend als Spiegel 22 ausgebildet. Es sind aber auch andere Ablenkeinheiten außer Spiegel wie etwa Optiken oder dergleichen denkbar. Der Spiegel 22 kann als Mikrospiegel, insbesondere als MEMS-Komponente ausgeführt sein und so ein Abtasten der Fläche der Speicherfolie 12 ohne oder mit nur geringer Relativbewegung zwischen Spiegel 22 und Stützvorrichtung 14 ermöglichen. Alternativ kann der Spiegel 22 auch herkömmlich als rotierender Spiegel für einen Trommelscanner vorgesehen sein. In diesem Fall ist eine Relativbewegung zwischen der Stützvorrichtung 14 und dem Spiegel 22 mittels einer Transportvorrichtung (nicht abgebildet) realisiert.

Die Scanvorrichtung 10 kann ferner einen in der Zeichnung gestrichelt angedeuteten Reflektor 24 umfassen, der den gesamten Messraum um die Speicherfolie 12 herum lichtdicht umschließt, sodass das von der Speicherfolie 12 ausgehende Fluoreszenzlicht 20 zu einem Photodetektor 26 reflektiert wird. Um zu verhindern, dass gestreutes Ausleselicht 18 in den Photodetektor 26 gelangt, können geeignete Maßnahmen wie etwa ein dichroitisches Filtermaterial vorgesehen sein.

Zur Steuerung des Auslesevorgangs umfasst die Scanvorrichtung 10 eine Steuereinheit 28, die beispielsweise neben der Steuerfunktion auch Auswerte- oder Korrekturfunktionen wahrnehmen kann. Die Steuereinheit 28 selbst oder die Auswerte- oder/und Korrekturfunktonen können aber auch auf einem separaten Computer implementiert sein. Die Steuereinheit 28 ist mittels Leitungen 30 mit der Stützvorrichtung 14, dem Detektor 26, dem Laser 16 sowie dem Spiegel 22 verbunden.

Zum Auslesen steuert die Steuereinheit 28 den Laser 16 sowie den Spiegel 22 an und tastet die Speicherfolie 12 punktweise sequenziell mit dem Ausleselichtstrahl 18 ab. Dabei wird die Intensität des abgegebenen Fluoreszenzlichts 20 mithilfe des Photodetektors 26 erfasst und in der Steuereinheit 28 zur Ausgabe aufbereitet.

Vor dem eigentlichen Auslesen des auf der Speicherfolie 12 gespeicherten Bildes wie gerade eben beschrieben wird in Abhängigkeit von der Bauweise der Scanvorrichtung 10 ein Vorauslesen durchgeführt. Bei der beschriebenen Scanvorrichtung 10, die mit einem steuerbaren Spiegel 22 wie etwa einem MEMS-Spiegel ausgestattet ist, könnte eine punktweise Vorbestimmung der Speicherfolie 12 durchgeführt werden. Bei einer herkömmlichen Trommelbauweise hingegen kann alternativ beispielsweise eine zeilenweise Vorbestimmung der Belichtung des auf der Speicherfolie 12 gespeicherten Bildes mit einer reduzierten Laserleistung des Ausleselichtstrahls 18 bei einer erhöhten Transportgeschwindigkeit der Speicherfolie 12 durchgeführt werden. Sowohl eine punktweise als auch eine zeilenweise durchgeführte Vorbestimmung gibt Anhaltspunkte über eine Belichtung der Speicherfolie 12. Der nachfolgende eigentliche Auslesescan kann dann mit optimierten Scanparametern durchgeführt werden. Bei einer Trommelscannerbauweise könnte die Speicherfolie 12 für den eigentlichen Auslesevorgang der Scanvorrichtung 10 ein zweites Mal zugeführt oder über die Transportvorrichtung zurückgefördert werden.

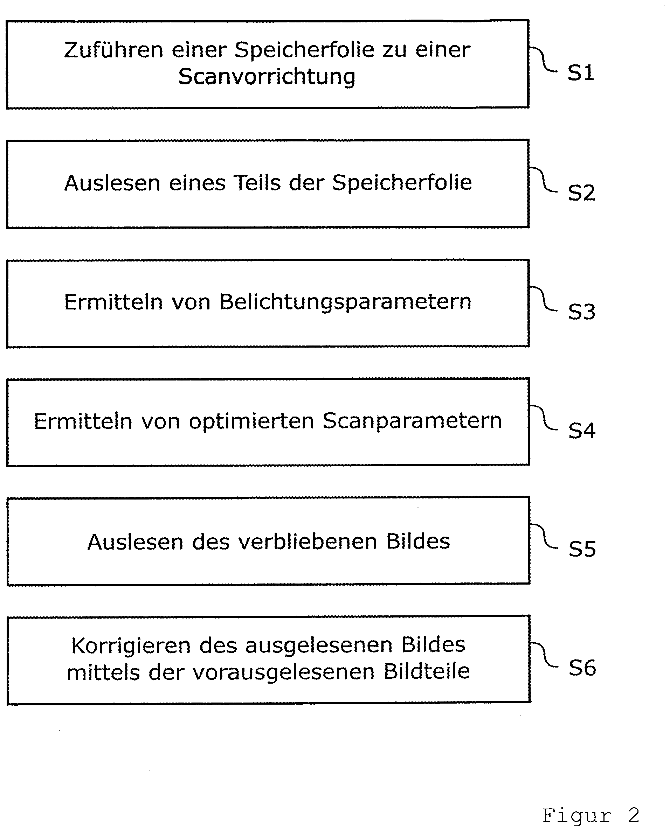

Figur 2 veranschaulicht ein erfindungsgemäßes Verfahren zum Auslesen einer Speicherfolie.

In einem ersten Schritt wird eine Speicherfolie einer Scanvorrichtung zum Auslesen der Speicherfolie zugeführt (S1).

Mit der Scanvorrichtung wird ein Teil der auf der Speicherfolie befindlichen Information ausgelesen (S2). Bei dem Teil der Speicherfolie kann es sich beispielsweise um auf der Speicherfolienfläche verteilte einzelne Bildpunkte, entsprechend verteilte Bildpunkt-Cluster, zeilen- oder spaltenförmige Linien, um abgegrenzte Speicherfolienareale oder/und um das gesamte Speicherfolienbild handeln. Das Auslesen kann mit reduzierter Ausleselicht-Intensität, mit höherer Auslesegeschwindigkeit, mit vergrößertem Auslese-Fleck, mit einer sich von dem Ausleselicht unterscheidenden Lichtcharakteristik wie beispielsweise Polarisation oder Wellenlänge und/oder einer beliebigen Kombination aus den genannten Eigenschaften durchgeführt werden.

Aus den ausgelesenen Bildinformationen wird auf die Belichtung des Bildes rückgeschlossen (S3). Dabei können beispielsweise ermittelte Bildintensitäten, Minimum-Maximum-Differenzen, Kontrastverhältnisse, etc. in Betracht gezogen werden.

Mittels der ermittelten Belichtungsparameter werden die Scanparameter für den eigentlichen Auslesevorgang optimiert (S4). Bei den zu optimierenden Parametern kann es sich beispielsweise um die Fokus- oder Fleckgröße, die Laserleistung des Anregelasers, die Verstärkung, die Empfindlichkeit oder/und die Kennlinie des Bildempfängers wie beispielsweise einem Photomultiplier oder/und die Integrationszeit pro Bildpunkt handeln.

Mittels der so ermittelten optimierten Scanparametern wird der verbleibende Rest des Bildes ausgelesen (S5).

Nach dem Auslesen des eigentlichen Bildes (S5) kann eine Korrektur des ausgelesenen Bildes anhand der vorausgelesenen Bildteile (S2) durchgeführt werden (S6). Dabei können entweder die nicht mehr auszulesenden vorausgelesenen Punkte interpoliert oder, falls an den bereits vorausgelesenen Punkten noch Emissionen stattgefunden haben, korrigiert werden.

## Patentansprüche

1. Vorrichtung (10) zum Auslesen einer belichteten Speicherfolie (12), umfassend
eine Lichtquelle (16), mit der Ausleselicht (18) erzeugbar ist,
eine Ablenkeinheit (22), mit der das Ausleselicht (18) zum Auslesen der Speicherfolie (12) sequenziell mit einem Auslesefleck auf die Speicherfolie (12) richtbar ist, wodurch dort ein wandernder Auslesefleck erzeugbar ist,
eine Detektoreinheit (26) für Fluoreszenzlicht (20), das von der Speicherfolie (12) beim Auslesen mit dem Ausleselicht (18) abgegeben wird,
eine Steuereinrichtung (28), die dazu eingerichtet ist, die Lichtquelle (16), die Ablenkeinheit (22) und die Detektoreinheit (26) zu steuern,
**dadurch gekennzeichnet, dass**
die Steuereinrichtung (28) dazu eingerichtet ist, ein Vorauslesen der Speicherfolie (12) zur Ermittlung von Ausleseparametern durchzuführen und
nachfolgend ein Auslesen der Speicherfolie (12) mit den ermittelten Ausleseparametern durchzuführen.

2. Vorrichtung nach Anspruch 1, wobei das Vorauslesen mit Vorausleseparametern durchgeführt wird, die sich von den Ausleseparametern unterscheiden.

3. Vorrichtung nach Anspruch 1 oder 2, wobei die Ausleseparameter eine Lichtleistung der Lichtquelle, eine Anregeleistung pro Speicherfolienfläche, eine Fleckgröße, eine Integrationszeit, eine Detektoreinheit-Verstärkung, eine Detektoreinheit-Empfindlichkeit, eine Detektoreinheit-Kennlinie, eine räumliches Ausleseschema oder/und ein zeitliches Ausleseschema umfassen.

4. Vorrichtung nach einem der vorhergehenden Ansprüche, wobei die Steuereinrichtung (28) dazu eingerichtet ist, das Vorauslesen mit einer Vorauslese-Anregeleistung pro Speicherfolienfläche durchzuführen, die niedriger als eine Auslese-Anregeleistung pro Speicherfolienfläche ist.

5. Vorrichtung nach Anspruch 4, wobei die Vorauslese-Anregeleistung pro Speicherfolienfläche durch eine Vorauslese-Lichtleistung der Lichtquelle erzeugbar ist, die kleiner als die Auslese-Lichtleistung der Lichtquelle ist.

6. Vorrichtung nach Anspruch 4 oder 5, wobei die Vorauslese-Anregeleistung pro Speicherfolienfläche durch eine Vorauslese-Fleckgröße erzeugbar ist, die kleiner oder größer als die Auslese-Fleckgröße ist.

7. Vorrichtung nach Anspruch 6, wobei die Vorauslese-Fleckgröße mindestens eine Größenordnung größer als die Auslese-Fleckgröße ist.

8. Vorrichtung nach einem der Ansprüche 4 bis 7, wobei die Vorauslese-Anregeleistung durch einen Vorauslese-Zeitraum bestimmt ist, der kleiner als der Auslese-Zeitraum ist.

9. Vorrichtung nach einem der vorhergehenden Ansprüche, wobei das Vorauslesen das Auslesen einer gegenüber der Gesamtzahl an Auslesepunkten kleineren Anzahl an Vorauslesepunkten umfasst.

10. Vorrichtung nach Anspruch 9, wobei die Vorauslese-punkte über die Speicherfolienfläche verteilt oder/und zeilenförmig oder/und spaltenförmig angeordnet sein können.

11. Vorrichtung einem der vorhergehenden Ansprüche, wobei die Steuereinrichtung dazu eingerichtet ist, das Vorauslesen mit einer höheren Auslesegeschwindigkeit durchzuführen.

12. Verfahren zum Auslesen einer Speicherfolie, mit der Vorrichtung nach Anspruch 1, das Verfahren mit den Schritten
Auslesen eines Teils einer auf der Speicherfolie befindlichen Information (S2);
Ermitteln von Ausleseparametern anhand des ausgelesenen Teils der Information (S3, S4); und
Auslesen des verbleibenden Teils der Information auf der Speicherfolie mit den Ausleseparametern (S5).

13. Verfahren nach Anspruch 12, wobei das Auslesen des Teils der Information mit Vorausleseparametern durchgeführt wird, die sich von den Ausleseparametern unterscheiden.

14. Verfahren nach einem der Ansprüche 12 oder 13, wobei das Ermitteln der Ausleseparameter ein Ermitteln der Belichtung der Speicherfolie anhand des ausgelesenen Teils der Information (S3) und ein Anpassen der Ausleseparameter anhand einer ermittelten Belichtung (S4) umfasst.

## Claims

1. Apparatus (10) for readout of an exposed imaging plate (12), comprising
a light source (16), with which readout light (18) can be generated,
a deflection unit (22), with which the readout light (18) for readout of the imaging plate (12) can be directed sequentially onto the imaging plate (12) with a readout spot, whereby a migrating readout spot can be generated there,
a detector unit (26) for fluorescence light (20) emitted by the imaging plate (12) during the readout by the readout light (18),
a control device (28) configured to control the light source (16), the deflection unit (22), and the detector unit (26),
**characterized in that**
the control device (28) is configured to carry out a pre-readout of the imaging plate (12) for determining readout parameters and
subsequently carry out a readout of the imaging plate (12) using the determined readout parameters.

2. Apparatus according to Claim 1, wherein the pre-readout is carried out with pre-readout parameters that differ from the readout parameters.

3. Apparatus according to Claim 1 or 2, wherein the readout parameters comprise a luminous power of the light source, an excitation power per imaging plate area, a spot dimension, an integration time, a detector unit gain, a detector unit sensitivity, a detector unit characteristic, a spatial readout scheme, or/and a temporal readout scheme.

4. Apparatus according to one of the preceding Claims, wherein the control device (28) is configured to carry out the pre-readout with a pre-readout excitation power per imaging plate area that is lower than a readout excitation power per imaging plate area.

5. Apparatus according to Claim 4, wherein the pre-readout excitation power per imaging plate area can be generated by a pre-readout luminous power of the light source that is smaller than the readout luminous power of the light source.

6. Apparatus according to Claim 4 or 5, wherein the pre-readout excitation power per imaging plate area can be generated by a pre-readout spot dimension that is smaller or larger than the readout spot dimension.

7. Apparatus according to Claim 6, wherein the pre-readout spot dimension is at least one order of magnitude larger than the readout spot dimension.

8. Apparatus according to one of Claims 4 to 7, wherein the pre-readout excitation power is determined by a pre-readout period of time that is shorter than the readout period of time.

9. Apparatus according to one of the preceding Claims, wherein the pre-readout comprises the readout of a number of pre-readout points, which is smaller than the overall number of readout points.

10. Apparatus according to Claim 9, wherein the pre-readout points may be distributed over the imaging plate area and/or arranged in the form of lines and/or columns.

11. Apparatus according to one of the preceding Claims, wherein the control device is configured to carry out the pre-readout with a higher readout speed.

12. Method for readout of an imaging plate, with the apparatus according to Claim 1, the method comprising the steps
readout of a part of an information on the imaging plate (S2);
determining readout parameters on the basis of the read part of the information (S3, S4); and
readout of the remaining part of the information on the imaging plate with the readout parameters (S5).

13. Method according to Claim 12, wherein the readout of the part of the information is carried out with pre-readout parameters that differ from the readout parameters.

14. Method according to one of Claims 12 or 13, wherein determining the readout parameters comprises determining the exposure of the imaging plate on the basis of the read part of the information (S3) and adapting the readout parameters on the basis of a determined exposure (S4).

## Revendications

1. Dispositif (10) pour lire un écran à mémoire exposé (12), comprenant une source de lumière (16) avec laquelle une lumière de lecture (18) peut être produite,
une unité de déviation (22) avec laquelle la lumière de lecture (18) peut être dirigée sur l'écran à mémoire (12) pour lire l'écran à mémoire (12) séquentiellement avec un spot de lecture, de sorte qu'un spot de lecture migrant peut y être produit,
une unité de détection (26) pour une lumière fluorescente (20) qui est émise par l'écran à mémoire (12) lors de la lecture avec la lumière de lecture (18),
un moyen de commande (28) qui est conçu pour commander la source de lumière (16), l'unité de déviation (22) et l'unité de détection (26),
**caractérisé en ce que**
le moyen de commande (28) est réalisé pour effectuer une prélecture de l'écran à mémoire (12) pour déterminer des paramètres de lecture et
pour effectuer ensuite une lecture de l'écran à mémoire (12) avec les paramètres de lecture déterminés.

2. Dispositif selon la revendication 1, dans lequel la prélecture est effectuée avec des paramètres de prélecture qui diffèrent des paramètres de lecture.

3. Dispositif selon la revendication 1 ou 2, dans lequel les paramètres de lecture comprennent une puissance lumineuse de la source de lumière, une puissance d'excitation par surface d'écran à mémoire, une taille de spot, un temps d'intégration, une amplification d'unité de détection, une sensibilité d'unité de détection, une courbe caractéristique d'unité de détection, un schéma de lecture spatial ou/et un schéma de lecture temporel.

4. Dispositif selon l'une des revendications précédentes, dans lequel le moyen de commande (28) est réalisé pour effectuer la prélecture avec une puissance d'excitation de prélecture par surface d'écran à mémoire qui est inférieure à une puissance d'excitation de lecture par surface d'écran à mémoire.

5. Dispositif selon la revendication 4, dans lequel la puissance d'excitation de prélecture par surface d'écran à mémoire peut être produite par une puissance lumineuse de prélecture de la source de lumière qui est inférieure à la puissance lumineuse de lecture de la source de lumière.

6. Dispositif selon la revendication 4 ou 5, dans lequel la puissance d'excitation de prélecture par surface d'écran à mémoire peut être produite par une taille de spot de prélecture qui est inférieure ou supérieure à la taille de spot de lecture.

7. Dispositif selon la revendication 6, dans lequel la taille de spot de prélecture est supérieure à la taille de spot de lecture d'au moins un ordre de grandeur.

8. Dispositif selon l'une des revendications 4 à 7, dans lequel la puissance d'excitation de prélecture est déterminée par une période de prélecture qui est inférieure à la période de lecture.

9. Dispositif selon l'une des revendications précédentes, dans lequel la prélecture comprend la lecture d'un plus petit nombre de points de prélecture que le nombre total de points de lecture.

10. Dispositif selon la revendication 9, dans lequel les points de prélecture peuvent être répartis et/ou disposés en lignes et/ou en colonnes sur la surface d'écran à mémoire.

11. Dispositif selon l'une des revendications précédentes, dans lequel le moyen de commande est conçu pour effectuer la prélecture à une vitesse de lecture plus élevée.

12. Procédé de lecture d'un écran à mémoire avec le dispositif selon la revendication 1, le procédé comprenant les étapes suivantes :
lecture d'une partie d'une information (S2) se trouvant sur l'écran à mémoire ;
détermination de paramètres de lecture à l'aide de la partie de l'information lue (S3, S4) ; et
lecture de la partie restante de l'information sur l'écran à mémoire avec les paramètres de lecture (S5).

13. Procédé selon la revendication 12, dans lequel la lecture de la partie de l'information est effectuée avec des paramètres de prélecture qui diffèrent des paramètres de lecture.

14. Procédé selon l'une des revendications 12 ou 13, dans lequel la détermination des paramètres de lecture comprend une détermination de l'exposition de l'écran à mémoire à l'aide de la partie de l'information lue (S3) et une adaptation des paramètres de lecture à l'aide d'une exposition déterminée (S4).
